# EUROPEAN PATENT APPLICATION

(11) **EP 1 720 329 A1**
(43) Date of publication of application: **08.11.2006**
(21) Application number: 06113171.0
(22) Date of filing: 26.04.2006
(51) Int. Cl.: H04M 3/42

(54) **Method for providing terminating services treatment for calls terminating in an IP network**

(30) Priority: 04.05.2005 US 677592 P; 20.09.2005 US 230970
(71) Applicant: AT&T Corp., New York, NY 10013-2412 (US)
(72) Inventor: Peters, Robert, Yaeger, Rumson, NJ 07760 (US); Samarasinghe, Harish, Holmdel, NJ 07733 (US)
(74) Representative: Harding, Richard Patrick

(57) **Abstract**

A method and apparatus for providing terminating services to calls is disclosed. In a first embodiment, a service broker in a VoIP network determines service match information corresponding to the call that originates in a PSTN network in order to determine whether terminating services are required for the call. The service broker then forwards that service match information to an application server where the required terminating services, if any, are applied to the call. The application server then forwards the call and the results of any applied terminating services to a CCE in order to continue call set up. In a second embodiment the call originates in an IP network.

## Description

### BACKGROUND OF THE INVENTION

The conventional Public Switched Telephone Network (PSTN) is a circuit switched network in which calls are assigned dedicated circuits during the duration of the call. Such networks are well known in the art. Recently, data packet networks, such as local area networks (LAN) and wide area networks (WAN) have become more prevalent. These data packet networks operate in accordance with the internet protocol (IP) and such networks are referred to as IP networks. The popularity of IP networks has created an interest in providing voice and related services over IP networks.

Conventional PSTN voice services dedicate a circuit connection between a calling and called party and, as such, that connection is guaranteed a certain level of performance because it is not shared with any other network users. IP networks, on the other hand, are shared networks in which the network resources are shared between users. The notion of a connection in a data packet network is very different from the notion of a connection in a circuit network. In a circuit network, the connection is a dedicated circuit which is used only by the calling and called parties. As such, it is easy to guarantee a certain level of service via the circuit network. However, the dedication of a circuit between all calling and called parties is frequently inefficient because such dedicated circuits provide more bandwidth than is necessary. In a data network, the connection between two parties is not dedicated, and traffic between the parties is transmitted via the data packet network along with the data packets of other users. There is no dedicated path between the parties, and data packets may be transmitted between the parties via different paths, depending upon network traffic. In the PSTN, call setup and call control services are controlled by a signaling network in accordance with the well known Signaling System No. 7 (SS7). An SS7 network exists within the PSTN network and controls call setup by conveying labeled messages via signaling channels which are separate from the voice channels.

Unlike traditional PSTN calls, voice calls placed over Voice over Internet Protocol (VoIP) networks employ a variety of call control services using a variety of signaling protocols, for example, H.323-over-IP and Session Initiation Protocol (SIP)-over-IP. The H.323 standard is a comprehensive and complex suite of protocols that provide specifications for real-time, interactive videoconferencing, data sharing and audio applications such as IP telephony. The SIP protocol is a more recent protocol that was developed specifically for IP telephony in view of popular web-based services. More efficient than H.323, SIP takes advantage of existing protocols to handle certain parts of the call control process. In contrast to the SS7 network utilized in the conventional PSTN network, messages in VolP networks using VolP signaling protocols, such as the H.323 and SIP protocols, are not transmitted via a dedicated signaling network, but are transmitted like any other data packets.

As is well-known, a multitude of services may be provided to calls in both PSTN and VoIP networks such as, illustratively, 8YY, call transfer and caller ID services. As is also well known, these services frequently require that the digits of the origination or destination address, or digits in other parts of the message, be manipulated in some fashion. In a PSTN call, for example, digits must sometimes be added as, for example, a prefix to a dialed number in order to route the call through a network. Alternatively, digits of an address or called number may require deletion before delivery to a terminating party (e.g., to conform to, illustratively, a PBX or other routing number format). Adding digits as a prefix or deleting digits from an address are referred to herein as "prefix/delete" services. For VolP services where an address may be an alphanumeric string such as john.smith@att.com.nj.mt "prefix/delete" services could entail adding or deleting letters. An example of prefix operation might be adding "development" to the user part of a request Uniform Resource Identifier (URI) to create the address development.john.smith@att.com.nj.mt, or adding room-E4 to the host portion of the request URI to create john.smith@room-E4.att.com.nj.mt. Examples of deletion operations might be smith@att.com.nj.mt or john.smith@att.com. Similarly, some services subscribed to by an originating or terminating party, such as the well known Dialed Number Identification Service (DNIS), may require that a particular format of number be provided to one of the parties. The DNIS is a telephone service that identifies for the recipient of a call what telephone number was dialed by the caller. DNIS functions by passing, for example, the touch tone digits dialed by the caller to the terminating destination so they can be displayed or made available for further processing, such as at a call center. Another example of a digit manipulation service is the well-known Caller ID service in which a terminating subscriber may only wish to see a 7 digit number for local calls on a caller ID display but may wish to see a 10 digit number (7 digits plus area code) for other calls. The providing of such services involving the manipulation of digits, as well as the aforementioned prefix/delete service, is referred to herein in general as "digit manipulation."

Such digit manipulation services may be associated, for example, with the origination point of the call (e.g., the calling number) or, alternatively, may be associated with the terminating point of the call (e.g., the called number). Such services associated with the originating point of the call are referred to herein as "originating services" and services associated with the terminating point of the call are referred to herein as "terminating services" or, interchangeably, "terminating treatment." In calls placed in a PSTN network, such services, either originating or terminating, are typically provided by a switch in the network which refers to a database located at a network control point to determine the services to be performed (e.g., the digits to be added or deleted). A switch associated with the originating point of the call is typically used to provide originating services and, for example, another switch associated with the terminating point of the call is typically used to provide terminating services. For every such service that is supported in the PSTN network, corresponding applications and signaling protocols/flows must be developed at a network control point and network switches in order to support that service.

As more and more PSTN networks are replaced by VolP networks, it is desirable to increase the consistency of available features between those VolP networks and PSTN networks. However, ensuring this consistency has proven difficult because in many cases, when a call originating in a PSTN network crosses the boundary between the PSTN and IP networks, certain applications may not be supported by the terminating IP network. To date, this limitation has been addressed, to the extent possible, by developing new functionality at a switch (such as the originating switch) in the PSTN network to provide terminating features and services, such as digit manipulation.

### SUMMARY OF THE INVENTION:

The present inventors have recognized that, while prior methods of providing features to calls originating in a PSTN network and terminating in an IP network were advantageous in many regards, they were also limited in certain regards. Specifically, the ultimate destination of a call in a VoIP network that originated in the PSTN network is often not known until that call enters the VoIP network and is routed within that network to a terminating destination. Thus, the originating PSTN switch may not be able to determine which applications are desired at that terminating destination. Also, developing applications in the PSTN network may be undesirable since such networks may be replaced by a VolP network and, even if development is done in the PSTN network, certain additional features would require development in the IP network to convey the terminating feature information through the VolP Network elements.

Therefore, the present inventors have invented a method and apparatus for providing terminating services to calls originating in a PSTN network and terminating in a VoIP network. Specifically, instead of developing new applications and services in the PSTN to provide such terminating services at, for example, the originating point of the call, the present inventors have invented a method and apparatus for providing those services at an application server in the VolP network. In a first embodiment, a service broker in said VolP network determines service match information corresponding to a call originating in a PSTN network in order to determine whether terminating services are required for the call. The service broker then forwards that service match information to an application server where the required terminating services, if any, are applied to the call. The application server then forwards the call and the results of any applied terminating services to a CCE in order to continue call set up.

In a second embodiment the call originates in an IP network. In this case, when a call arrives at the service broker, the service match information is determined as a function of the particular border element at which the call entered the network.

These and other advantages of the invention will be apparent to those of ordinary skill in the art by reference to the following detailed description and the accompanying drawings.

### BRIEF DESCRIPTION OF THE DRAWINGS

FIG. 1 shows a prior art PSTN network;

FIG. 2 shows an IP network in which one embodiment of the present invention may be implemented;

FIG. 3 is a network diagram of how a PSTN network may be connected to a VolP network in accordance with the principles of the present invention; and

FIG. 4 shows the steps of a method in accordance with one embodiment of the present invention.

### DETAILED DESCRIPTION

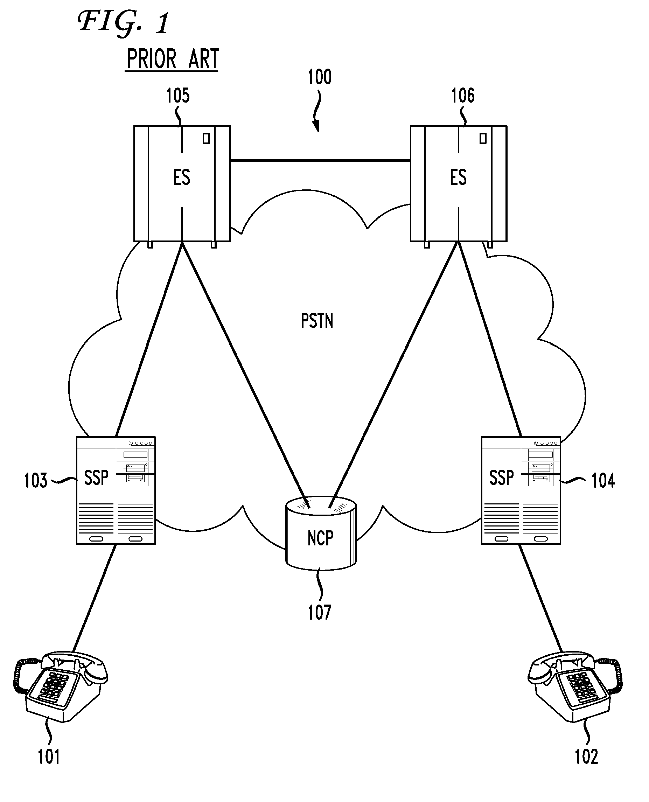

FIG. 1 shows an illustrative prior PSTN network used to place calls between two endpoints. Referring to that figure, PSTN network 100 has telephones 101 and 102 connected to switches referred to herein as service switching points (SSPs) 103 and 104, respectively. The SSPs 103 and 104 are, in turn, connected to network control point (NCP) 107 via packet-based edge switches (ESs) 105 and 106, also respectively. As is well known, SSPs are switches that are directly connected via voice trunks to telephones, such as telephones 101 and 102, and function to originate and terminate calls. SSPs are, illustratively, class 5 switches. To perform these functions, SSPs communicate with other SSPs to setup, manage and release voice circuits required to complete a call. For example, in order to set up a call between telephone 101 and 102, if SSP 103 is directly connected to SSP 104, SSP 103 will send signals to SSP 104 to setup a voice circuit for the call. If, on the other hand, SSP 103 is not directly connected to SSP 104 (as is the case in FIG. 1), then SSP 103 will send signals via ES 105 to ES 106 and then to SSP 104 in order to setup the call. As is well known, ESs route each incoming message based on routing information contained in the SS7 message. ESs may also function to translate the digits in the signaling message (e.g., dialed 8YY number or calling card number) to look up and determine the destination signaling point. Methods of setting up such calls in a PSTN network are well-known and will not be described further herein.

In order to determine whether any services are to be provided to a particular call, SSPs 103 and 104 send queries to NCP 107 for call routing determination and to determine if any applications are to be provided to a call. Such applications include the aforementioned digit manipulation services, as well as other services provided by the network. When NCP 107 receives a request to determine if any applications are to be provided or to determine how to proceed with an application, the NCP then refers to a database and looks up any matches between various call parameters and applications associated with those parameters. If any matches are found, the NCP 107 then invokes the specified applications by, for example, adding prefix digits to a number or manipulating the number according to the subscribed service. In addition to NCPs providing the applications, there are some terminating features that may be provided on a Trunk Group basis (i.e. the Trunk Group from the SSP 103 or 104). Providing services and applications in the PSTN network is also well known and will not be described further herein.

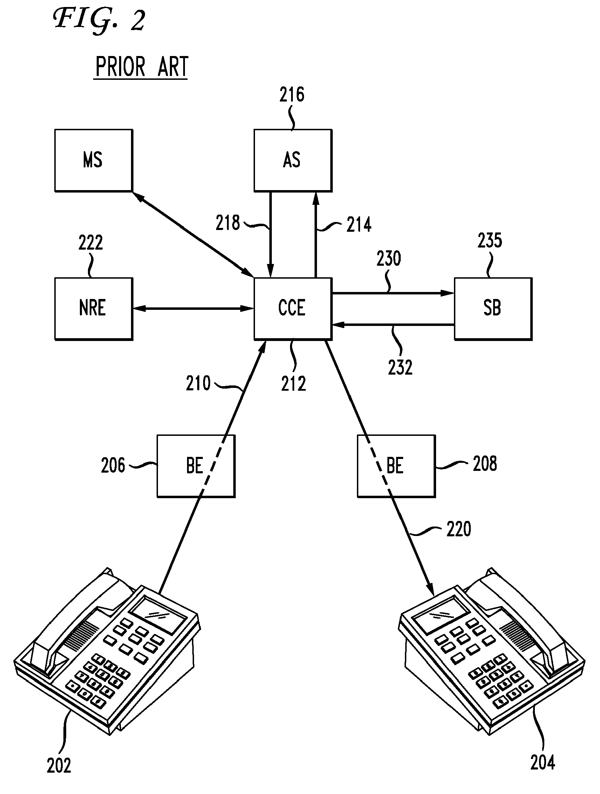

Recently, VoIP networks have begun to replace PSTN networks. VoIP networks are inherently more bandwidth efficient and, as a result, may be more cost-efficient than PSTN networks. FIG. 2 shows a block diagram of a prior art IP network adapted to setup and carry voice calls. The network, for example, utilizes the Session Initiation Protocol (SIP) in order to set up connections (e.g., VolP calls) between users. As discussed previously, SIP is a well known application-layer control protocol used to establish, modify and terminate sessions such as IP telephony calls. SIP is described in detail in Internet Engineering Task Force (IETF) Request for Comments (RFC) 3261; SIP: Session Initiation Protocol; J. Rosenberg, H. Schulzrinne, G. Camarillo, A. Johnston, J. Peterson, R. Sparks, M. Handley, E. Schooler; June 2002. The details of SIP will not be described herein, as the protocol is well known to those skilled in the art. The protocol will be described only insofar as necessary for an understanding of the present invention.

With reference to FIG. 2, it is to be understood that the network elements shown in FIG. 2, such as application server 216, are logical entities. Such logical entities may be implemented in various hardware configurations. For example, these network elements may be implemented using programmable computers which are well known in the art. Such programmable computers would have the required network interfaces to allow for network communication, as well as appropriate software for defining the functioning of the network elements. Such software is executed on one or more computer processors which control the overall operation of the network elements via execution of such software. The detailed hardware and software configuration of the network elements will not be described in detail herein. One skilled in the art of data networking and computers could readily implement such network elements given the description herein. As used herein, a network element refers to a logical entity which performs a network function. A network node refers to the computing platform on which a network element is implemented.

Referring now to FIG. 2, assume that IP enabled telephone 202 in a SIP network wishes to initiate an IP telephony call to IP enabled telephone 204. In FIG. 2, telephone 202 is connected to a border element (BE) 206 which provides telephone 202 access to the IP network. Similarly, telephone 204 is connected to BE 208 which provides telephone 204 access to the IP network. In the example of FIG. 2, the transaction begins by telephone 202 sending an INVITE request 210 addressed to telephone 204's Uniform Resource Identifier (URI) which identifies telephone 204. The INVITE request contains a number of header fields which are named attributes that provide additional information about a message. The details of an INVITE are well known and will not be described in detail at this point.

The INVITE message 210 is received at the call control element (CCE) 212. The CCE 212 performs the functions of interfacing with other network elements such as Border Elements (BE) 206 and 208, Service Broker (SB) 235, Application Server (AS) 216, Media Servers (MS), Network Routing Engine (NRE) 222, and other network elements, to provide the necessary functions to process a call request. The CCE 212 determines whether special feature processing is required by the call by sending an INVITE message 230 to service broker (SB) 235. Examples of special processing are 8YY (e.g., 800) calls or Software Defined Network (SDN) calls. The SB 235 determines the special processing, if any, that is required based on call information it receives in the INVITE message 230. It is noted that while the SB function is a separate logical function from the CCE, the SB function may be contained in the CCE network element or a standalone network element. If special feature processing is required, the SB 235 determines the appropriate application server, here AS 216, to provide the special feature processing for the call. The SB 235 sends a REDIRECT message 232 to the CCE 212 indicating the IP address of application server 216 to provide the feature processing. The CCE 212 sends a query (an SIP INVITE) 214 to AS 216 and the applications are processed for the call. Once all features have been processed, the AS 216 sends a SIP message such as a INVITE or REFER 218 containing a new routing number to the CCE for further processing to set up the call 220 with telephone 204.

As discussed previously, with VolP networks replacing a greater number of PSTN networks, calls having one end point in one type of network (e.g., the PSTN) and another endpoint in a different type of network (e.g., a VoIP network) are becoming more commonplace. However, as also discussed above, providing digit manipulation features in such calls is problematic. Specifically, for a call originating in the PSTN, but terminating in the VolP network, the originating switch cannot determine the end destination of the call within the VoIP network. As a result, terminating services subscribed to by the terminating user, such as the above-discussed digit manipulation service, cannot be provided by the originating switch in the PSTN network.

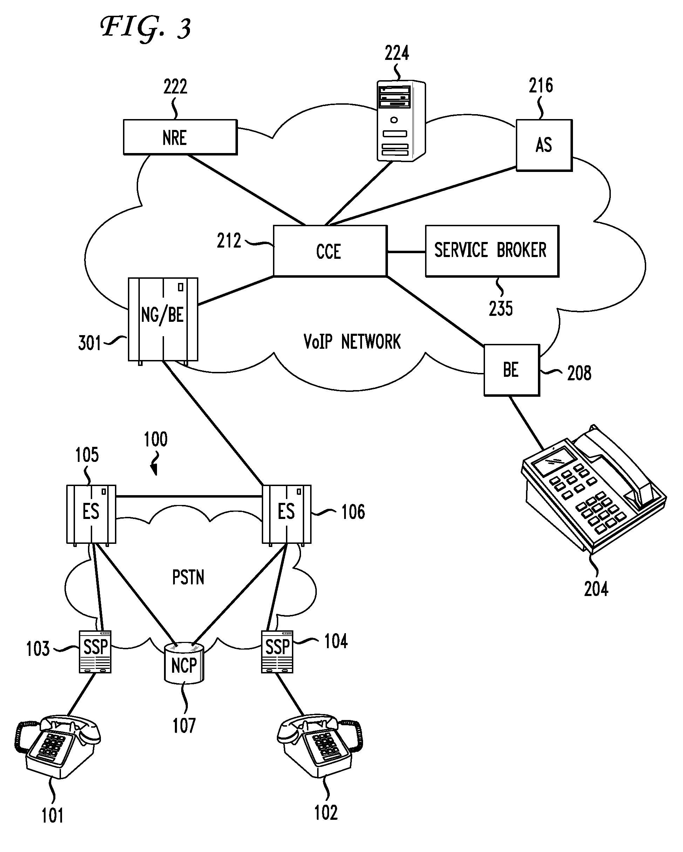

Therefore, the present inventors have invented a method to facilitate terminating services for calls that originate in the PSTN and terminate in a VoIP network. Specifically, when a call originating in a PSTN network has a destination located in a VolP network, such terminating services are provided by an Application Server, such as AS 216 in FIG. 2. FIG. 3 is an illustrative diagram showing how the network of FIG. 1 and a network represented by the block diagram of FIG. 2 may be integrated in order to provide terminating services in accordance with one embodiment of the principles of the present invention.

Referring to FIG. 3, instead of an IP telephone being connected to the VoIP network via a border element, such as BE 206 in FIG. 2, in FIG. 3 edge switch 106 in PSTN 100 is connected to a border element 301, herein referred to as a Network Gateway/Border Element (NG/BE), in the VoIP network. The VoIP network is, once again, a SIP-based network. If telephone 101 in the PSTN 100 wishes to place a call to IP telephone 204, the PSTN has traditionally been unable to provide terminating digit manipulation services to the call since the destination address within the VoIP network is unknown within the PSTN 100. Such services could be provided in the PSTN, as has been suggested, by migrating subscription information from the VoIP network to the PSTN network. However, providing for such migration and corresponding services at, for example, the originating switch in the PSTN would require new application development. As discussed above, this is undesirable.

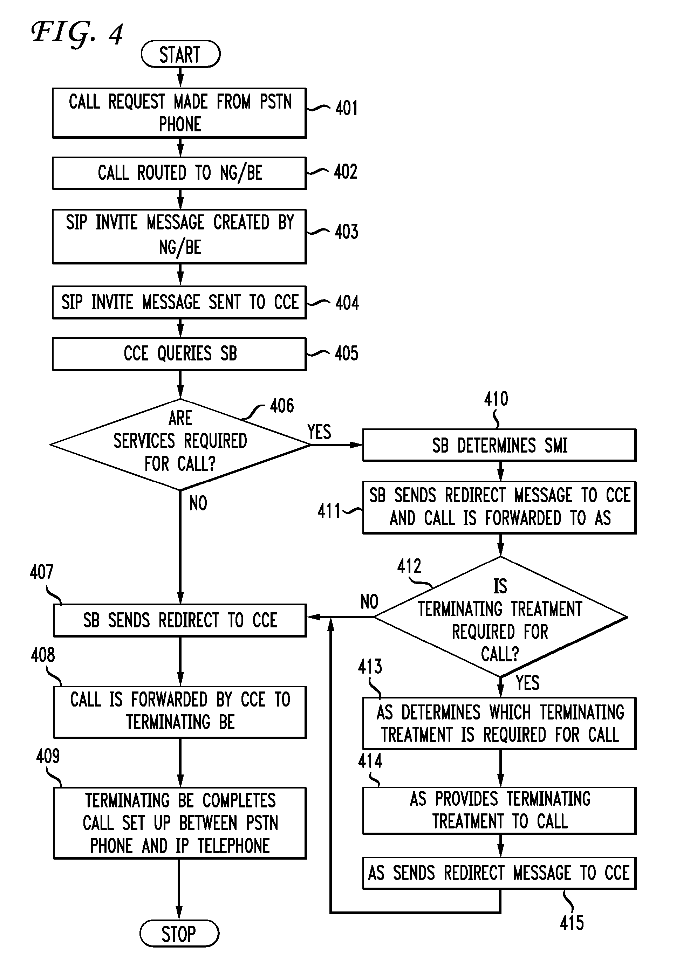

FIG. 4 shows an illustrative method in accordance with one embodiment of the principles of the present invention whereby terminating services treatment is provided by the integrated network of FIG. 3. Specifically, at step 401 a call request is made from a phone in the PSTN, such as telephone 101 in FIG. 3, to a phone in the VoIP network, such as IP telephone 204. At step 402, that call is routed via a well-known Initial Address Message (IAM) to the NG/BE 301. The IAM contains various elements of information such as the original dialed number, the called party number and the calling party number. Then, at step 403, the NG/BE 301 uses this information to create, for example, a SIP INVITE message and, at step 404, sends that message to the CCE 212 for call setup. Specifically, when the IAM is received at the NG/BE 301, the NG/BE 301 illustratively maps the original dialed number to the "To" header of the INVITE message, the called party number to the "request URI" header and the calling party number to the "From" header of the INVITE message. At step 405, when the CCE 212 receives the INVITE message from NG/BE 301, the CCE 212 queries the SB 235 and, at step 406, a determination is made by the SB 235 whether terminating treatment is required for the incoming call. Specifically, in one embodiment in accordance with the principles of the present invention, the SB determines if the call qualifies for an application query for a terminating service that requires digit manipulation. The SB makes this determination, for example, based on the fact that the INVITE message originated from a particular BE, such as NG/BE 301, and by looking up in a database the Called Party Number in the request URI. In this example, the SB would be provisioned with the specific Called Party Numbers that require a query to an Application Server for various services, including terminating services treatment. This provisioning could be accomplished by any method, including by looking up three digits (e.g., 8YY), six digits (8YY-555), by 10 digits (8YY-555-1234) or by any other desired provisioning method.

If no matches are found at step 406, then at step 407, the SB 235 sends a REDIRECT message to the CCE and, at step 408, the call is forwarded to the terminating BE 208 which completes the call at step 409 with IP telephone 204. If, on the other hand, the SB finds at step 406 one or more service matches in the database, thus indicating that services and/or terminating treatment is required, at step 410 the SB will determine what is referred to herein as Service Match Information (SMI). SMI includes, for example, the AS address(es) for providing the treatment, the service(s) to be applied to the call and, illustratively, a customer account ID associated with the subscriber for the service. At step 411, the SB will then send a REDIRECT message to the CCE to send the message along with the SMI to the identified AS. Then, in accordance with one embodiment of the principles of the present invention, at step 412 the AS will use the SMI to determine whether any terminating treatment is required for the call. For example, the SMI determined by the SB could explicitly indicate that terminating services are required. The AS will then determine at step 413 the exact terminating service subscription by reference to a database containing such subscription information. For example, the terminating services subscribed to may require digit manipulation of the routing addresses, such as the well-known Prefix/Delete service or manipulation of the calling party number, as discussed above. At step 414, the AS will provide the determined terminating service to the call.

After providing the required service(s) according to the subscription requirements, at step 415 the AS will then send a SIP REDIRECT message to the CCE containing the manipulated digits. Once the CCE receives the REDIRECT message from the AS, then again at step 409 the CCE routes the call to the terminating BE 208. At step 409, the terminating BE 208 then completes the call and passes the manipulated digits to the customer associated with the original dialed number. Once again, these manipulated digits may represent a particular format of the calling number that the subscribing customer may wish to view in a DNIS or Caller ID service or may be any other type of manipulated digits for routing or other services that are subscribed to by the terminating customer.

One skilled in the art will recognize that a method similar to the above-described method could also be applied to calls originating in a VolP network and terminating in a VolP network. Specifically, in prior VoIP networks, services such as digit manipulation have typically been provided by the CCE directly or, alternatively, at a BE, such as BE 208 in FIG. 3. However, since the above illustrative method provides an infrastructure for providing such services to PSTN-originating calls at an AS, such as AS 216 in FIG. 3, the present inventors have also recognized that it would be desirable to provide such terminating services at the AS for IP-network originating calls as well. In this situation, the SB will identify SMI for the call based, in part, on the originating border element being associated with an IP network, such as an H.323 network or a SIP network. Otherwise, the method as outlined in FIG. 4 remains the same.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

1. A method for use by a node in a Voice over Internet Protocol (VoIP) network for providing terminating treatment to a call, said method comprising:
receiving at said node a request for an application to be provided to said call;
determining in response to said request a terminating treatment to be provided to said call; and
providing said terminating treatment to said call.

2. The method of claim 1 wherein said node comprises an application server in said VoIP network.

3. The method of claim 1 or 2 wherein said terminating treatment comprises at least one digit manipulation service.

4. The method of claim 3 wherein said digit manipulation service comprises adding a prefix to an address associated with said call.

5. The method of claim 3 or 4 wherein said digit manipulation service comprises deleting digits from an address associated with said call.

6. The method of claim 3, 4 or 5 wherein said digit manipulation service comprises providing a specific address to a terminating customer of said call.

7. The method of any preceding claim wherein said terminating treatment comprises manipulating alphanumeric characters in a Uniform Resource Identifier (URI).

8. The method of any preceding claim wherein said call originates in a circuit-based network and terminates in said VoIP network.

9. The method according to any one of claims 1 to 7 wherein said call originates in a VoIP network and terminates in said VoIP network.

10. A node in a Voice over Internet Protocol (VoIP) network for providing terminating treatment to a call, said node comprising:
means for receiving at said node a request for an application to be provided to said call;
means for determining in response to said request a terminating treatment to be provided to said call; and
means for providing said terminating treatment to said call.

11. The node of claim 10 wherein said node comprises an application server in said VoIP network.

12. The node of claim 10 or 11 wherein said means for determining comprises at least a first database associated with said application server, said database containing service subscriptions associated with a called number, said service subscriptions identifying the terminating treatment to be provided to calls made to said called number.

13. The node of claim 10, 11 or 12 wherein said terminating treatment comprises deleting digits from an address associated with said call.

14. The node according to any one of claims 10 to 13 wherein said terminating comprises providing a specific address to a terminating customer of said call.

15. The node according to any one of claims 10 to 14 wherein said terminating treatment comprises manipulating at least one alphanumeric character in a Uniform Resource Identifier (URI).
